# FASCICULE DE BREVET EUROPEEN

(11) **EP 2 149 836 B1**
(45) Date de publication et mention de la délivrance du brevet: **01.08.2018**
(21) Numéro de dépôt: 09172808.9
(22) Date de dépôt: 05.12.2002
(51) Int. Cl.: H04W 52/02, H04W 88/02

(54) **OPTIMISATION DE LA CONSOMMATION D'UNE PUCE AUXILIAIRE MULTIMEDIA DANS UN TERMINAL DE RADIOCOMMUNICATION MOBILE**
OPTIMIZIERUNG DER ENERGIEAUFNAHME IN EINEM HILFSPROZESSOR IN EINEM MOBILEN RADIOKOMMUNIKATIONSGERÄT
OPTIMIZATION OF POWER CONSUMPTION IN AN AUXILIARY MULTIMEDIA PROCESSOR IN A MOBILE RADIOCOMMUNICATION DEVICE

(30) Priorité: 06.12.2001 FR 0115776
(43) Date de publication de la demande: 03.02.2010
(62) Demande divisionnaire de: 02293001.0
(73) Titulaire: DRNC HOLDINGS, INC., Wilmington, Delaware 19809 (US)
(72) Inventeur: Villaret, Olivier, 78290, Croissy-sur-Seine (FR)
(74) Mandataire: AWA Sweden AB

(56) Documents cités:
- EP-A- 0 677 974
- WO-A-93/25955
- WO-A2-02/075517
- US-A- 4 545 030
- US-A- 5 058 203
- US-A- 5 142 684
- US-A- 6 040 845
- US-A1- 2004 192 412

## Description

La présente invention se rapporte à un terminal de radiocommunication où la consommation d'une puce auxiliaire multimédia intégrée au terminal est optimisée de sorte à augmenter l'autonomie du terminal en mode veille.

L'invention se rapporte donc plus particulièrement au domaine des télécommunications et notamment au domaine des terminaux de radiocommunication de type GSM (acronyme pour l'expression anglo-saxonne « Global System Mobil ») susceptibles de mettre en oeuvre des fonctions de type multimédia.

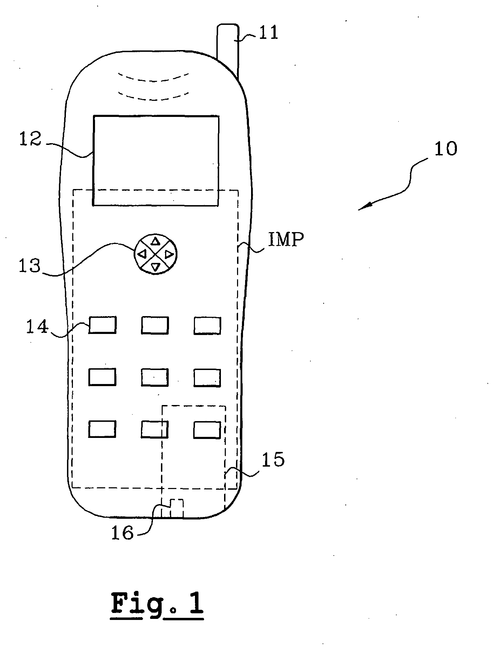

La figure 1 montre un tel terminal de radiocommunication 10, comprenant essentiellement une antenne de réception 11, un écran 12, typiquement un écran à affichage par cristaux liquides, une touche de navigation 13 et un pavé de touches 14. Le terminal 10 comprend en plus une batterie 15 intégrée et une fiche de connexion 16 pour la connexion de la batterie avec un chargeur de batterie. Enfin, le terminal 10 comprend un circuit imprimé IMP pour accueillir l'ensemble des circuits du terminal de radiocommunication parmi lesquels des puces de microprocesseur de différents types.

En effet, dans une architecture classique de terminaux de radiocommunication de type GSM, l'écran de type écran à affichage par cristaux liquides est géré par un microprocesseur réalisé sur une puce appelée la puce GSM, qui permet d'afficher à l'écran les barres de champs, l'état de la batterie etc..., et permet éventuellement de faire tourner des jeux. De plus, pour mettre en oeuvre des fonctions de type multimédia par l'intermédiaire de terminaux de radiocommunication GSM, il existe des composants spécifiques appelés puces auxiliaires multimédia MMCC (pour « Multimédia Companion Chip »). De tels composants sont dotés de très fortes capacités de traitement du signal pour permettre la gestion d'applications multimédia de type audio ou vidéo par exemple.

Le problème technique qui se pose alors concerne la gestion de l'écran à affichage par cristaux liquides lorsqu'une puce auxiliaire multimédia MMCC est intégrée à une architecture classique de terminaux GSM. En effet, on a alors deux microprocesseurs qui doivent cohabiter pour traiter les informations liées à la gestion de l'écran.

Or, les puces auxiliaires nécessitant des performances d'affichage accrues, elles sont directement connectées à un écran et ce sont donc ces composants qui gèrent les accès à l'écran. Ainsi est-il communément admis que la puce auxiliaire multimédia doit piloter le module de commande de l'écran à affichage par cristaux liquides du terminal de radiocommunication GSM. Pour ce faire, de tels composants possèdent donc généralement une RAM interne correspondant à l'image de l'écran et leur permettant de mettre en oeuvre leur traitement d'image.

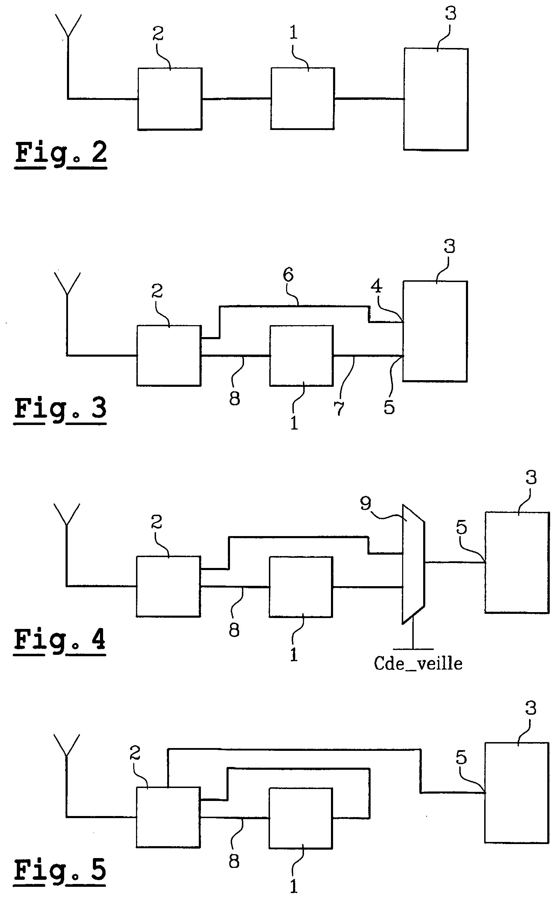

La figure 2 montre une telle architecture où une puce auxiliaire multimédia 1 est connectée à une puce GSM 2 par l'intermédiaire d'une liaison série, la puce GSM 2 étant prévue pour gérer les fonctionnalités classiques liées au protocole GSM. Une liaison bus parallèle est prévue pour assurer le transfert d'informations entre la puce auxiliaire multimédia 1 et un module de commande 3 qui gère l'écran à affichage par cristaux liquides du terminal de radiocommunication mobile.

On sait que l'économie d'énergie est un enjeu crucial pour les fabricants de terminaux de radiocommunication GSM et cet enjeu se traduit notamment par un souci d'optimiser au mieux l'autonomie en mode veille des terminaux de radiocommunication, le mode veille se caractérisant par une simple écoute du réseau, le terminal n'émettant rien. Cependant, quand le terminal de radiocommunication mobile est en mode veille, l'écran à affichage par cristaux liquides doit être rafraîchi régulièrement avec des informations concernant notamment l'état du réseau, l'état de la batterie, etc...

Or, on a vu que l'intégration d'une puce auxiliaire multimédia dans un terminal de radiocommunication GSM aboutit à l'architecture de la figure 2, où le module de commande de l'écran est piloté par la puce auxiliaire multimédia.

Selon la norme GSM, il est stipulé qu'une écoute du réseau doit être réalisée toutes les 2,5 secondes en moyenne. Ainsi, lorsque le terminal de radiocommunication est en mode veille, la puce GSM a potentiellement des informations à transmettre à la puce auxiliaire multimédia toutes les 2,5 secondes.

La puce auxiliaire multimédia doit alors sortir de l'état de veille pour mettre en oeuvre l'opération de rafraîchissement de l'écran à affichage par cristaux liquides. Dans tous les autres cas, des modes de mise hors tension de la puce auxiliaire sont mis en oeuvre. La puce auxiliaire désactive alors toutes ses ressources non nécessaires et reste en mode veille.

Néanmoins, comparé à une architecture d'un terminal de radiocommunication mobile classique où la puce GSM pilote directement l'écran à affichage par cristaux liquides par l'intermédiaire de son module de commande, l'architecture illustrée à la figure 2 d'un terminal de radiocommunication mobile « intelligent » où une puce auxiliaire multimédia est intégrée impose donc de mettre sous tension la puce auxiliaire multimédia même quand le terminal est en mode veille pour rafraîchir l'écran à affichage par cristaux liquides.

Ainsi, le fait de mettre sous tension la puce auxiliaire multimédia avec ses mémoires pour permettre l'affichage à l'écran d'informations qui concernent l'état du réseau alors que la puce auxiliaire est spécifiquement prévue pour traiter des informations de type multimédia a pour conséquence d'augmenter notablement la consommation d'énergie (notamment à cause des courants de fuite) pendant la durée du mode veille où des opérations de rafraîchissement de l'écran doivent être mises en oeuvre.

Une architecture de terminal de radiocommunication mobile telle qu'elle est représentée à la figure 2 où la puce auxiliaire multimédia pilote le module de commande de l'écran à affichage par cristaux liquides présente donc de faibles performances en terme de consommation d'énergie en mode veille du terminal.

WO93/25955 montre un terminal de radiocommunication ayant deux processeurs. Un écran est commandé par l'intermédiaire de l'un des processeurs, qui peut être éteint pour économiser l'énergie.

C'est par conséquent un objet de la présente invention de pallier aux inconvénients de l'art antérieur sus-mentionnés en proposant une amélioration à l'architecture décrite à la figure 2, de sorte à fournir un terminal de radiocommunication type GSM intelligent, c'est à dire intégrant une puce auxiliaire multimédia, doté de performances de consummation d'énergie en mode veille équivalentes à celles d'un terminal de radiocommunication mobile standard.

A cet effet, l'invention prévoit d'éviter d'utiliser la puce auxiliaire multimédia lorsque le terminal de radiocommunication est en mode veille. Ainsi, en mode veille où le terminal n'est pas en communication et met simplement en oeuvre une function d'écoute du réseau, l'invention prévoit de désactiver la puce auxiliaire multimédia et l'écran à affichage par cristaux liquides est alors rafraîchi directement par l'intermédiaire de la puce GSM.

L'invention concerne donc terminal de radiocommunication comprenant un écran, un module de commande configuré pour commander l'écran, un premier microprocesseur configuré pour piloter le module de command pour gérer des fonctionnalités multimédia de l'écra et un second microprocesseur configuré pour piloter le module de commande pour gérer des fonctionnalités autres que les fonctionnalités multimédia de l'écran, caractérisé en ce que le second microprocesseur est configuré pour être seul maître du module de commande lorsque le terminal de radiocommunication est dans un mode veille et le premier microprocesseur est configuré pour être seul maître du module de commande lorsque le terminal de radiocommunication n'est pas dans un mode veille.

D'autres caractéristiques et avantages de la présente invention apparaîtront plus clairement à la lecture de la description qui suit donnée à titre d'exemple illustratif et non limitatif et faite en référence aux figures annexées dans lesquelles:
- la figure 1 est un schéma illustrant un terminal de radiocommunication standard et a déj
   à été décrite ;
- la figure 2 est un schéma illustrant les inconvénients liés à l'intégration d'une puce
   auxiliaire multimédia dans une architecture de terminal de radiocommunication standard et a déjà été décrite
- la figure 3 est un schéma illustrant un premier mode de réalisation de l'invention;
- la figure 4 est un schéma illustrant un second mode de réalisation de l'invention, et
- la figure 5 est un schéma illustrant un troisième mode de réalisation de l'invention.
On retrouve aux figures 3, 4 et 5 les memes éléments que ceux déjà décrits en référence à la figure
2. Ainsi, la figure 3 montre un premier type de microprocesseur 1 réalisé sur une puce appelée puce auxiliaire multimédia. La puce auxiliaire 1 est dédiée spécifiquement au traitement des fonctionnalités multimédia du terminal dans lequel elle est intégrée,
permettant ainsi d'améliorer fortement les fonctionnalités graphiques du terminal.

Un deuxième type de microprocesseur 2 est réalisé sur une autre puce appelée puce GSM. La puce GSM 2 est en effet prévue pour traiter les autres fonctionnalités du terminal de radiocommunication dans lequel elle est intégrée et en particulier les fonctionnalités liées à la gestion du protocole GSM.

La figure 3 montre enfin un module de commande 3 de l'écran à affichage par cristaux liquides disposant à la fois d'une interface série 4 et d'une interface parallèle 5. Dans ce premier mode de réalisation de l'invention, les deux types de microprocesseur 1 et 2 sont chacun connectés au module de commande 3 de l'écran à affichage par cristaux liquides. La puce GSM 2 ayant le moins d'informations à transmettre est connectée à l'interface série du module de commande 3 par l'intermédiaire d'une liaison bus série 6, tandis que la puce auxiliaire multimédia 1 est connectée à l'interface parallèle du module de commande 3 par l'intermédiaire d'une liaison bus parallèle 7, la puce GSM 2 et la puce auxiliaire multimédia 1 étant également connectées ensemble par l'intermédiaire d'une ligne de transmission de données 8. A un instant donné, on considère qu'il n'y a qu'un seul type de microprocesseur maître du module de commande de l'écran à affichage par cristaux liquides.

Dans cette configuration, notamment pour les applications de type multimédia, le module de commande de l'écran à affichage par cristaux liquides est piloté par la puce auxiliaire multimédia 1, la puce GSM étant quant à elle prévue pour gérer les autres fonctionnalités du terminal. Les informations concernant notamment l'affichage des barres de champ, l'état de la batterie etc... qui sont classiquement traitées par la puce GSM 2 sont alors transférées vers la puce auxiliaire 1 par l'intermédiaire de la ligne de transmission de données 8 de sorte à ce que la puce auxiliaire 1 commande l'affichage de ces informations à l'écran.

Cependant, lorsque le terminal passe en mode veille, c'est à dire qu'il est simplement en écoute du réseau, l'utilisateur ayant décidé d'arrêter les applications multimédia en cours, la puce GSM 2 devient seule maître du module de commande 3 de l'écran par l'intermédiaire le la liaison bus série 6. Ainsi, en mode veille, il n'y a que la puce GSM 2 qui travaille. Auquel cas, un transfert d'informations doit être réalisé avant de désactiver la puce auxiliaire multimédia 1, de la puce auxiliaire 1 vers la puce GSM 2 par l'intermédiaire de la ligne de transmission de données 8, de sorte que la puce GSM récupère le contexte dans lequel se trouvait l'écran du terminal avant qu'elle ne prenne la main et pilote à son tour le module de commande de l'écran.

La puce auxiliaire multimédia ainsi que ses mémoires, peut donc être désactivée en mode veille, autorisant ainsi de meilleures performances en terme d'économie d'énergie. Un mécanisme de désactivation est donc mis en oeuvre pour partager le module de commande de l'écran à affichage par cristaux liquides entre la puce GSM, lorsque le terminal est en mode veille, et la puce auxiliaire multimédia dans tous les autres cas, ce qui permet d'augmenter l'autonomie en veille du terminal ou du moins de la rendre équivalente à celle d'un terminal de radiocommunication standard ne mettant pas en oeuvre de puce auxiliaire multimédia.

Il est à noter que tous les modules de commande d'écran à affichage par cristaux liquides ne possèdent pas deux types d'interface, série et parallèle, comme en référence à la figure 1, mais pour la plupart seulement une interface parallèle. La figure 4 propose alors un mode de réalisation particulier de l'invention susceptible de s'adapter à de tels modules de commande d'écran.

Le module de commande 3 de l'écran à affichage par cristaux liquides de la figure 4 possède donc une seule interface parallèle 5, ce qui implique qu'un seul circuit peut lui être connecté.

L'architecture de la figure 4 comprend alors en plus un multiplexeur externe 2x1 9 dont les deux entrées sont connectées respectivement, l'une au premier type de microprocesseur réalisée sur la puce auxiliaire multimédia 1, l'autre au deuxième type de microprocesseur réalisé sur la puce GSM 2, par l'intermédiaire de liaisons de type bus parallèle. La sortie du multiplexeur 9 est quant à elle connectée à l'interface parallèle du module de commande 3 de l'écran à affichage par cristaux liquides par l'intermédiaire d'une liaison de type bus parallèle. Enfin, la puce GSM 2 et la puce auxiliaire 1 sont reliées entre elles par la ligne de transmission de données 8.

Le rôle du multiplexeur 9 est de gérer une priorité d'accès au module de commande 3 de l'écran entre la puce auxiliaire multimédia 1 et la puce GSM 2. Le multiplexeur 9 permet de prendre en compte soit le flux de données qui vient de la puce GSM lorsque le terminal est en mode veille, soit le flux de données qui vient de la puce auxiliaire multimédia dans les autres cas.

Pour ce faire, le multiplexeur externe 9 est commandée par une commande cde-veille, laquelle peut par exemple être pilotée par la puce GSM. Ainsi, lorsque le terminal se trouve en mode veille et que l'utilisateur décide d'arrêter les applications multimédia en cours, la commande cde-veille est appliquée au multiplexeur 9 par l'intermédiaire de la puce GSM et le flux de données pris en compte pour piloter le module de commande de l'écran est celui issu de la puce GSM 2. La puce GSM 2 pilote alors le module de commande 3 de l'écran tandis que la puce auxiliaire multimédia 1 est désactivée, ce qui permet d'optimiser la consommation d'énergie du terminal en mode veille. Préalablement à sa désactivation, la puce auxiliaire 1 transfère des informations à la puce GSM 2 par l'intermédiaire de la ligne 8 de sorte que la puce GSM 2 récupère le contexte dans lequel se trouvait l'écran avant qu'elle ne prenne la main pour piloter à son tour l'écran.

Inversement, lorsque le terminal n'est plus en mode veille ou que l'utilisateur lance des applications multimédia, la commande cde-veille n'est pas appliquée au multiplexeur 9 et le flux de données pris en compte par le multiplexeur sera celui issu de la puce auxiliaire multimédia 1 qui va alors piloter le module de commande 3 de l'écran. Quand la puce auxiliaire 1 est activée, des données sont transmises sur la ligne 8 de la puce GSM 2 vers la puce auxiliaire 1 qui pilote dorénavant l'écran de façon à tenir compte des informations classiquement traitées par la puce GSM concernant les barres de champs, l'état de la batterie etc...

Enfin, le mode de réalisation de la figure 5 illustre une variante du mode de réalisation qui vient d'être décrit en référence à la figure 4. Dans cette variante, une évolution de la puce GSM classique est mise en oeuvre dans un souci d'utiliser le minimum de composant. Ainsi, le multiplexeur 9 de la figure 4 est avantageusement intégré à la puce GSM 2, laquelle doit alors comprendre des entrées/sorties supplémentaires. Néanmoins, les connexions entre les différents composants restent identiques par rapport à la figure 4. L'intégration du multiplexeur 9 à la puce GSM 2 ne modifie donc en rien le fonctionnement tel qu'il a été décrit en référence à la figure 4 mais permet par contre d'optimiser davantage l'architecture de la figure 4 en terme de coût et de place, en plus de permettre une optimisation de l'autonomie du terminal en mode veille.

## Revendications

1. Terminal de radiocommunication (10) comprenant un écran (12), un module de commande (3) configuré pour commander l'écran (12), un premier microprocesseur (1) configuré pour piloter le module de commande (3) pour gérer des fonctionnalités multimédia de l'écran (12) et un second microprocesseur (2) configuré pour piloter le module de commande (3) pour gérer des fonctionnalités autres que les fonctionnalités multimédia de l'écran (12), **caractérisé en ce que** le second microprocesseur (2) est configuré pour être seul maître du module de commande (3) lorsque le terminal de radiocommunication (10) est dans un mode veille et le premier microprocesseur (1) est configuré pour être seul maître du module de commande (3) lorsque le terminal de radiocommunication (10) n'est pas dans un mode veille.

2. Terminal de radiocommunication (10) selon la revendication 1, **caractérisé en ce que** le second microprocesseur (2) est en outre configuré pour piloter le module de commande (3) par l'intermédiaire du premier microprocesseur (1).

3. Terminal de radiocommunication (10) selon la revendication 1, **caractérisé en ce que** le second microprocesseur (2) est réalisé sur une puce de système global de télécommunication avec les mobiles (GSM).

4. Terminal de radiocommunication (10) selon la revendication 1, **caractérisé en ce que** le premier microprocesseur (1) est réalisé sur une puce auxiliaire multimédia.

5. Terminal de radiocommunication (10) selon la revendication 1, **caractérisé en ce que** le second microprocesseur (2) est configuré pour réaliser des fonctionnalités qui sont liées à la gestion d'un protocole GSM.

6. Terminal de radiocommunication (10) selon la revendication 1, **caractérisé en ce que** le second microprocesseur (2) est connecté au module de commande (3) par l'intermédiaire d'une liaison bus série (6) ou d'une ligne de transmission de données (8).

7. Terminal de radiocommunication (10) selon la revendication 1, **caractérisé en ce que** le premier microprocesseur (1) est connecté au module de commande (3) par l'intermédiaire d'une interface parallèle (5).

8. Terminal de radiocommunication (10) selon la revendication 1, **caractérisé en ce que** lorsque le terminal de radiocommunication (10) est en mode veille, le second microprocesseur (2) est configuré pour désactiver le premier microprocesseur (1).

9. Terminal de radiocommunication (10) selon la revendication 1, **caractérisé en ce que** les premier (1) et second (2) microprocesseurs sont connectés au module de commande (3) par l'intermédiaire d'un multiplexeur (9).

10. Terminal de radiocommunication (10) selon la revendication 9, **caractérisé en ce que** le multiplexeur (9) est connecté à une interface parallèle (5) du module de commande (3).

11. Terminal de radiocommunication (10) selon la revendication 9, **caractérisé en ce que** le multiplexeur (9) est commandé par une commande, de telle sorte que lorsque le terminal de radiocommunication (10) est en mode veille, la commande est appliquée au multiplexeur (9) de telle sorte que le second microprocesseur (2) transfère des informations au module de commande (3).

12. Terminal de radiocommunication (10) selon la revendication 9, **caractérisé en ce que** le multiplexeur (9) est commandé par une commande, de telle sorte que lorsque le terminal de radiocommunication (10) n'est pas en mode veille, la commande n'est pas appliquée au multiplexeur (9) de telle sorte que le premier microprocesseur (1) transfère des informations au module de commande (3).

13. Terminal de radiocommunication (10) selon la revendication 9, **caractérisé en ce que** le second microprocesseur (2) est réalisé sur une puce GSM et le multiplexeur (9) est intégré à la puce GSM.

## Patentansprüche

1. Radiokommunikationsgerät (10), umfassend einen Bildschirm (12), ein Steuermodul (3), das eingerichtet ist, um den Bildschirm (12) zu steuern, einen ersten Mikroprozessor (1), der eingerichtet ist, um das Steuermodul (3) zu steuern, um Multimediafunktionen des Bildschirms (12) zu verwalten, und einen zweiten Mikroprozessor (2), der eingerichtet ist, um das Steuermodul (3) zu steuern, um andere Funktionen als die Multimediafunktionen des Bildschirms (12) zu verwalten, **dadurch gekennzeichnet, dass** der zweite Mikroprozessor (2) eingerichtet ist, um der einzige Master des Steuermoduls (3) zu sein, wenn das Radiokommunikationsgerät (10) in einem Standby-Modus ist, und der erste Mikroprozessor (1) eingerichtet ist, um der einzige Master des Steuermoduls (3) zu sein, wenn das Radiokommunikationsgerät (10) nicht im Standby-Modus ist.

2. Radiokommunikationsgerät (10) nach Anspruch 1, **dadurch gekennzeichnet, dass** der zweite Mikroprozessor (2) ferner eingerichtet ist, um das Steuermodul (3) unter Vermittlung des ersten Mikroprozessors (1) zu steuern.

3. Radiokommunikationsgerät (10) nach Anspruch 1, **dadurch gekennzeichnet, dass** der zweite Mikroprozessor (2) auf einem GSM(Global System for Mobile telecommunication)-System hergestellt ist.

4. Radiokommunikationsgerät (10) nach Anspruch 1, **dadurch gekennzeichnet, dass** der erste Mikroprozessor (1) auf einem Multimedia-Hilfsprozessor hergestellt ist.

5. Radiokommunikationsgerät (10) nach Anspruch 1, **dadurch gekennzeichnet, dass** der zweite Mikroprozessor (2) eingerichtet ist, um Funktionen zu verwirklichen, die mit der Verwaltung eines GSM-Protokolls verbunden sind.

6. Radiokommunikationsgerät (10) nach Anspruch 1, **dadurch gekennzeichnet, dass** der Mikroprozessor (2) an das Steuermodul (3) über eine serielle Busverbindung (6) oder eine Datenübertragungsleitung (8) angeschlossen ist.

7. Radiokommunikationsgerät (10) nach Anspruch 1, **dadurch gekennzeichnet, dass** der erste Mikroprozessor (1) an das Steuermodul (3) über eine parallele Schnittstelle (5) angeschlossen ist.

8. Radiokommunikationsgerät (10) nach Anspruch 1, **dadurch gekennzeichnet, dass**, wenn das Radiokommunikationsgerät (10) im Standby-Modus ist, der zweite Mikroprozessor (2) eingerichtet ist, um den ersten Mikroprozessor (1) zu deaktivieren.

9. Radiokommunikationsgerät (10) nach Anspruch 1, **dadurch gekennzeichnet, dass** der erste (1) und der zweite (2) Mikroprozessor an das Steuermodul (3) unter Vermittlung eines Multiplexers (9) angeschlossen sind.

10. Radiokommunikationsgerät (10) nach Anspruch 9, **dadurch gekennzeichnet, dass** der Multiplexer (9) an eine parallele Schnittstelle (5) des Steuermoduls (3) angeschlossen ist.

11. Radiokommunikationsgerät (10) nach Anspruch 9, **dadurch gekennzeichnet, dass** der Multiplexer (9) durch einen Befehl gesteuert wird, so dass, wenn sich das Radiokommunikationsgerät (10) im Standby-Modus befindet, der Befehl an dem Multiplexer (9) angewandt wird, so dass der zweite Mikroprozessor (2) Informationen an das Steuermodul (3) weiterleitet.

12. Radiokommunikationsgerät (10) nach Anspruch 9, **dadurch gekennzeichnet, dass** der Multiplexer (9) durch einen Befehl gesteuert wird, so dass, wenn sich das Radiokommunikationsgerät (10) nicht im Standby-Modus befindet, der Befehl nicht an dem Multiplexer (9) angewandt wird, so dass der erste Mikroprozessor (1) Informationen an das Steuermodul (3) weiterleitet.

13. Radiokommunikationsgerät (10) nach Anspruch 9, **dadurch gekennzeichnet, dass** der zweite Mikroprozessor (2) auf einer GSM-Chipkarte hergestellt ist, und der Multiplexer (9) in die GSM-Chipkarte integriert ist.

## Claims

1. A radio communications terminal (10) comprising a screen (12), a control module (3) configured to control the screen (12), a first microprocessor (1) configured to drive the control module (3) to manage multimedia functions of the screen (12) and a second microprocessor (2) configured to drive the control module (3) to manage other functions than the multimedia functions of the screen (12), **characterized in that** the second microprocessor (2) is configured to be the sole master of the control module (3) when the radio communications terminal (10) is in standby mode and the first microprocessor (1) is configured to be the sole master of the control module (3) when the radio communications terminal (10) is not in standby mode.

2. A radio communications terminal (10) according to claim 1, **characterized in that** the second microprocessor (2) is further configured to drive the control module (3) by means of the first microprocessor (1).

3. A radio communications terminal (10) according to claim 1, **characterized in that** the second microprocessor (2) is implemented on a Global System for Mobile Communications (GSM) chip.

4. A radio communications terminal (10) according to claim 1, **characterized in that** the first microprocessor (1) is implemented on a multimedia auxiliary chip.

5. A radio communications terminal (10) according to claim 1, **characterized in that** the second microprocessor (2) is configured to implement functions associated with the management of a GSM protocol.

6. A radio communications terminal (10) according to claim 1, **characterized in that** the second microprocessor (2) is connected to the control module (3) by means of a serial bus link (6) or a data transmission line (8).

7. A radio communications terminal (10) according to claim 1, **characterized in that** the first microprocessor (1) is connected to the control module (3) by means of a parallel interface (5).

8. A radio communications terminal (10) according to claim 1, **characterized in that**, when the radio communications terminal (10) is in standby mode, the second microprocessor (2) is configured to deactivate the first microprocessor (1).

9. A radio communications terminal (10) according to claim 1, **characterized in that** the first (1) and second (2) microprocessors are connected to the control module (3) by means of a multiplexer (9).

10. A radio communications terminal (10) according to claim 9, **characterized in that** the multiplexer (9) is connected to a parallel interface (5) of the control module (3).

11. A radio communications terminal (10) according to claim 9, **characterized in that** the multiplexer (9) is controlled by a command in such a way that, when the radio communications terminal (10) is in standby mode, the command is applied to the multiplexer (9) so that the second microprocessor (2) transfers information to the control module (3).

12. A radio communications terminal (10) according to claim 9, **characterized in that** the multiplexer (9) is controlled by a command in such a way that, when the radio communications terminal (10) is not in standby mode, the command is applied to the multiplexer (9) so that the first microprocessor (1) transfers information to the control module (3).

13. A radio communications terminal (10) according to claim 9, **characterized in that** the second microprocessor (2) is implemented on a GSM chip and the multiplexer (9) is integrated in the GSM chip.
